# EUROPEAN PATENT APPLICATION

(11) **EP 0 526 046 A2**
(43) Date of publication of application: **03.02.1993**
(21) Application number: 92306503.1
(22) Date of filing: 15.07.1992
(51) Int. Cl.: F01L 3/02, B23P 15/00

(54) **Composite poppet valve and method for manufacturing same**

(30) Priority: 29.07.1991 US 736984
(71) Applicant: EATON CORPORATION, Cleveland, Ohio 44114 (US)
(72) Inventor: Van Asperen, Frederick George, Battle Creek, Michigan 49017 (US); Caird, Stephen Benedict, Marshall, Michigan 49068 (US); Larson, Jay Michael, Marshall, Michigan 49068 (US)
(74) Representative: Douglas, John Andrew

(57) **Abstract**

A method for making a composite poppet valve, and a poppet valve fabricated using that method. A composite slug (22) is formed of a cylindrical core (15) of a light weight metal such as titanium to which is fixed as by friction welding a disc or cup shaped element of a wear resistant cladding material such as steel (16). The composite slug is first extruded, wear resistant material first, through an extrusion die to form a blank followed by a restriking process to form the head portion of the valve into its final shape. The configurations and proportions of the core and cladding material are controlled to produce a poppet valve having a light weight core and a wear resistant cladding which varies in extent from defining the tip (18) of the valve with cladding extending part way up the stem to a configuration wherein the cladding material completely encapsulates the core material.

## Description

The present invention relates to poppet valves for internal combustion engines, and more particularly to a poppet valve fabricated of titanium and steel.

In the design of reciprocating internal combustion engines more and more emphasis is being placed on light weight valve train components. One area of valve train design that is affected by such emphasis is in the design of intake and exhaust poppet valves wherein valves fabricated of titanium or titanium alloys are desirable because of their light weight, strength to weight ratio and corrosion resistance at high temperatures as compared with similar valves fabricated of steel.

One problem associated with the use of titanium or titanium-containing valves is that different parts of an engine valve, including the valve head, the stem and the stem end or tip, are required to have different properties for optimum valve performance. For example, the head portion must be highly heat resistant, while mechanical strength and wear resistance are requirements for the stem portion. At the same time, the tip and the seat portion of the head are required to be wear resistant.

Since no single material processes all of the above properties, composite valves have been developed using different materials for different portions of the valve. One such valve structure is disclosed in United States Patent No. 4,834,036 to Nishiyama et al, wherein the head is formed of a titanium alloy or a titanium aluminide, the stem is formed of a tube of a high strength steel such as chromium-molybdenum, and the tip is formed of a very hard material such as martensitic stainless steel. It can be appreciated that while the deficiencies of titanium as a stem and tip material can be overcome by such composite structures, assembly of the individual parts is required.

Bimetallic valves have been fabricated by extruding a bimetallic billet, as shown in United States Patent No. 2,431,853; however, such processes do not include the desired combination of light weight, heat resistance in the head portion, and a wear resistant stem.

Another method by which the light weight and heat resistance of titanium can be used advantageously while minimizing its deficiencies as a stem and tip material, is to coat the stem with plasma-sprayed molybdenum and add a steel tip. This process, however, is relatively expensive, and also requires assembly.

When titanium valves are fabricated by means of an extrusion process another problem that occurs is that galling tends to occur in the area of the stem and the fillet between the stem and the head in the extrusion process, and that die life is relatively short.

It is, therefore, an object of the present invention to provide a light weight poppet valve with maximum wear resistance in the stem and tip portions of the valve and preferrably in the stem, tip and seat portions.

Another object is to provide a valve as above eliminating or at least minimizing assembly operations.

Another object is to provide a valve as above formed as a core of a light weight material such as titanium with a cladding of a wear resistant material such as steel in the regions of the stem, tip and seat.

Another object of the invention is to provide a valve as above by means of an extrusion process which improves the life of the extrusion die, and avoids galling of the valve stem and fillet.

The present invention meets the objectives by means of a process wherein a bimetallic slug comprising a titanium portion and a steel portion is formed and then is advanced through an extrusion die steel end first to form a valve blank, after which the blank is subjected to a restriking process to form the final valve shape. The result of this process is a poppet valve which takes advantage of the described properties of both materials. In one embodiment of the invention, the head and major portion of the stem comprises titanium and wherein a portion of the stem is clad with steel, and wherein the tip is steel. By proper proportioning of the titanium and steel portion of the slug and control of the extrusion process, the steel cladding extends a sufficient distance from the tip of the valve toward the stem such that when the valve is assembled in the valve guide of the engine, only the steel clad portion will contact the valve guide. In accordance with a preferred embodiment, the tip, stem and seat portion are clad with steel; and in accordance with a further embodiment a titanium core is fully encapsulated by the steel cladding.

Other objectives and advantages of the invention will be apparent from the following description when considered in connection with the accompanying drawings, wherein:
Fig. 1A is a cross-sectional view of a poppet valve formed in accordance with the invention;
Fig. 1B is a cross-sectional view of bimetallic slug from which the valve of Fig. 1 is to be formed;
Digs. 1C-1F are cross-sectional views of other embodiments of the poppet valve of Fig. 1A and the slug of Fig. 1B ;
Figs. 2 and 3 are schematic views depicting extrusion and restrike operations used to fabricate a poppet valve; and
Figs. 4A-4D are cross-sectional views of alternative slug configurations.

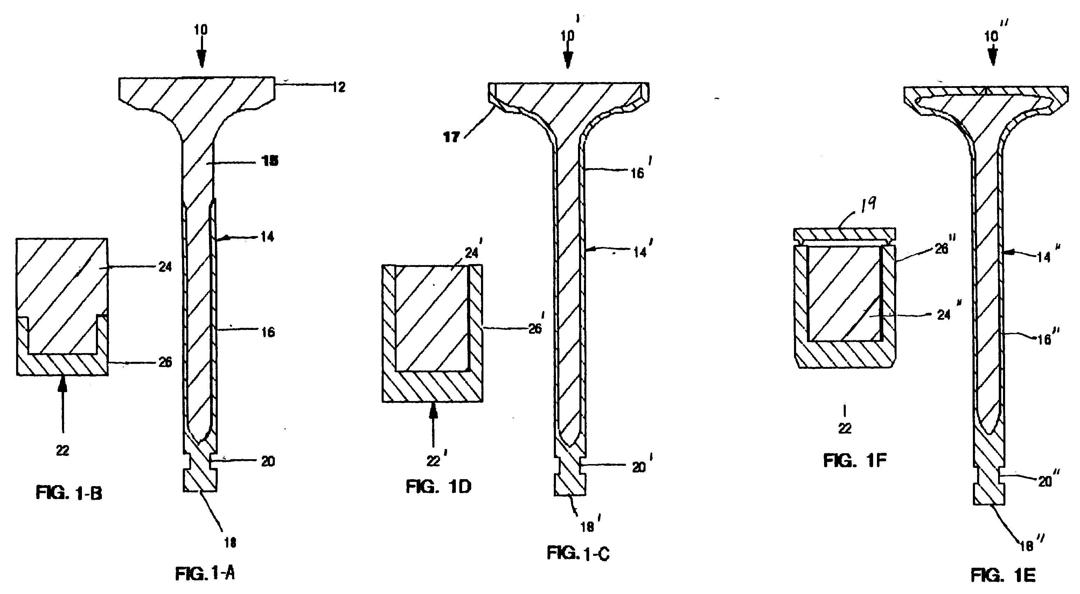

Referring to FIG. 1A, there is illustrated a poppet valve 10 fabricated in accordance with the invention, wherein the head portion 12 of the valve is titanium, the stem portion 14 comprises a core 15 of titanium with a cladding 16 of an iron based alloy such as steel, the cladding also defining the tip 18 of the valve. This configuration provides an engine valve which takes advantage of the light weight of titanium while retaining the wear resistance of steel along the stem of the valve where the valve is in sliding engagement with a valve guide, and at the tip where the valve engages a tappet or cam follower. Also, the area of the keeper groove 20 adjacent the tip can be hardened.

Referring to Fig. 1B, there is illustrated a bimetallic slug 22 from which the valve 10 depicted in Fig. 1A is formed as will be described in detail below. In this embodiment the slug comprises a core 24 with the cladding formed initially as a cup member 26 partially enclosing the core then friction or C-D welded to the core.

In Fig. 1C, the valve 10′ is formed with the cladding 16′ extending to enclose the entire stem portion 14 and seat area 17. Fig. 1D illustrates a slug 22′ used to form the Fig. 1C embodiment wherein the cladding 26′ extends the full lengh of the core 24′ and wherein the core is pressed into the cladding member to form the slug. This configuration provides improved wear characteristics for the seat in applications using iron, steel or powdered metal seat inserts.

Fig. 1E illustrates a third embodiment wherein the cladding 16˝ completely encloses the core, the valve being formed from the slug 22˝ shown in Fig. 1F wherein the clad slug is closed by a cap 19 of an iron based alloy which is friction welded or otherwise attached to the slug.

The following description is specifically applied to the embodiment shown in Figs. 1C and 1D; however, it will be appreciated that the described process can be applied to all the embodiments illustrated herein.

The valve 10 is preferably manufactured by an extrusion process carried out at between 1600°F and 1900°F, followed by restriking and finish machining.

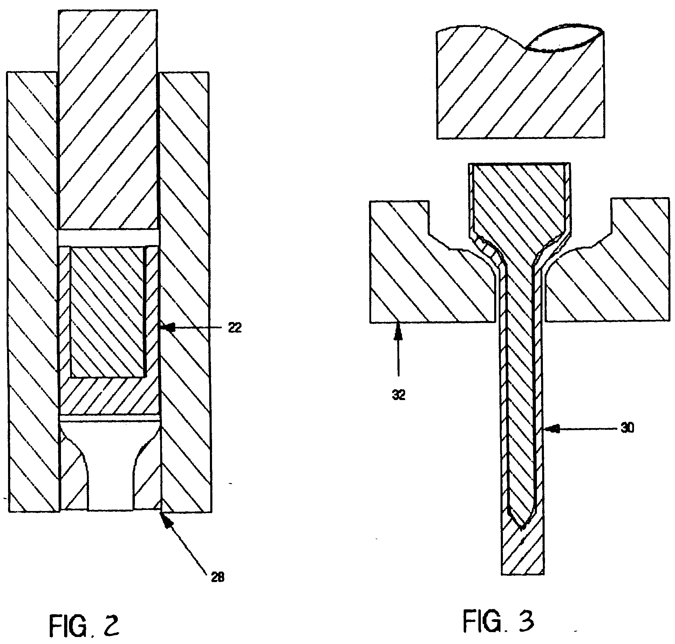

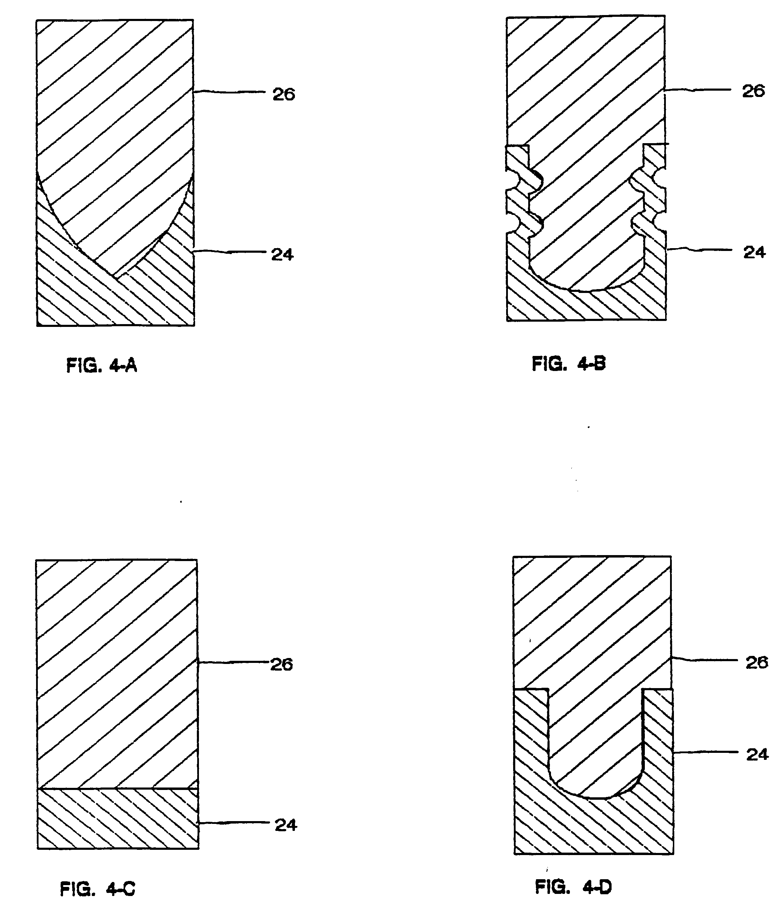

Referring to Fig. 2, the composite slug 22 is inserted steel end first into an extrusion die set 28 to produce a composite blank 30. The blank 30 is then subjected to a restriking process as shown in Fig. 3 using a restrike die set 32 to form the valve into its final shape prior to finish machining.

Actual manufacturing runs have been made on slugs configured as in FIGS. 1A-1F with the titanium portion comprising between 75% and 90% of the total volume of the composite valve, the titanium being Ti-6-4 and the steel cladding being SAE-1547.

While the above tests were conducted using slugs or billets as shown in FIGS. 1A-1F, other composite slug configurations, as shown in FIGS. 4A-4D, can be expected to yield similar results. While the steel portion can be friction or C-D welded to the titanium portion, example Fig. 4B illustrates a slug configuration wherein the steel cladding 26 is crimp-locked onto the titanium portion. The slugs shown in Figs. 4A-4D are configured to produce the valve shown in Fig. 1A. It can be appreciated, however, that the slugs shown in Figs. 4B and 4D can be modified to produce slugs from which the Figs. 1C and 1E configurations can be fabricated.

In the foregoing description, the composite valve of the invention has been described as comprising a titanium core to which a cladding of steel is applied. The inventive process, however, can be applied to a valve wherein the core is aluminum or some other light weight material and the claddding is formed of a material other than steel. Examples of such combinations are a core of 600 series aluminum and a cladding of SAE-1547 steel; a core of ZK60A magnesium alloy with a cladding of SAE-1547 steel and a core of Ti-6-2-4-2s titanium and a cladding of an austenitic alloy such as SAE EV-12.

## Claims

1. A method for making a composite poppet valve having a core member formed of a first material and a cladding portion formed of a second material comprising the steps of forming a cylindrical slug having a first portion of said first material and a second portion of said second material fixed to said first portion; extruding said composite slug through an extrusion die second material first to form a valve blank having a core of the first material and at least the stem portion clad in the second material and the tip portion of the second material, and then subjecting the head portion of said blank to a restriking operation to form the final poppet valve blank in condition for final machining.

2. A method as claimed in claim 1 in which said second material is formed as a generally cup-shaped member partially enclosing said first material in defining said slug.

3. A method is claimed in claim 1 in which said second material is formed as a generally cup-shaped member partially enclosing said first material, said slug further including a cap member formed of the same material as said second material and fixed to the open end of said cup-shaped member to fully enclosed said first material; whereby the blank formed by extruding said slug comprises a core of said first material incapsulated by said second material.

4. A method as claimed in claim 1 in which said second material is fixed to said first material by friction welding.

5. A method as claimed in claim 2 in which said second material is fixed to said first material by press fitting.

6. A method as claimed in claim 2 in which said first material is formed with grooves formed therein and said second material is fixed to said first material by crimping said second material into said grooves.

7. A method as claimed in claim 3 in which said cup member is fixed to said second material by friction welding.

8. A method as claimed in any one of claims 1 through 7 in which said first material is a light weight metal and said second material is an iron based alloy.

9. A method as claimed in claim 8 in which said first material is titanium and said second material is steel.

10. A composite poppet valve for internal combustion engines having a head portion, a stem portion and a tip portion; comprising a core of a light weight, heat resistant material, and a cladding of a wear resistant material; said cladding material also defining the tip portion of said valve and said cladding extending from the tip end of said valve along said stem portion toward the head at least to a point beyond which the stem of the valve is not subjected to reciprocating wear.

11. A poppet valve as claimed in claim 10, in which said cladding extends to a point including a seat portion of said head portion.

12. A poppet valve as claimed in claim 10, in which said cladding completely encapsulates said core.

13. A poppet valve as claimed in any one of claims 10 through 12, in which said core material is titanium and said cladding material is steel.
